(19) **Europäisches Patentamt**

**European Patent Office**

**Office européen des brevets**

(11) **EP 1 048 697 A2**

(12) **EUROPEAN PATENT APPLICATION**

(43) Date of publication:
**02.11.2000 Bulletin 2000/44**

(51) Int. Cl.⁷: **C09C 1/30**, C09C 3/12, C01B 33/193

(21) Application number: **00303331.3**

(22) Date of filing: **19.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.04.1999 US 300903**

(71) Applicant:
**DOW CORNING CORPORATION**
**Midland Michigan 48686-0994 (US)**

(72) Inventors:
- **Burns, Gary Thomas**
  **1380 Ohain (BE)**

- **Deng, Qin**
  **Midland, Michigan 48642 (US)**
- **Hahn, James Ricard**
  **Midland, Michigan 48640 (US)**
- **Krivak, Thomas G.**
  **Harrison City, Pennsalvania 15636 (US)**
- **Okel, Timothy A.**
  **Trafford, Pennsylvania 15085 (US)**
- **Reese, Clifford Carlton**
  **Midland, Michigan 48642 (US)**

(74) Representative: **Kyle, Diana**
**Elkington and Fife**
**Prospect House**
**8 Pembroke Road**
**Sevenoaks, Kent TN13 1XR (GB)**

(54) **Preparation of hydrophobic precipitated silica**

(57)    A method for the preparation of hydrophobic precipitated silica. The method comprises contacting an aqueous suspension of a hydrophilic precipitated silica with (1) a catalytic amount of an acid and (2) an organosilicon compound in the presence of (3) a surfactant in an amount sufficient to facilitate reaction of the hydrophilic precipitated silica with the organosilicon compound to form a hydrophobic precipitated silica.

EP 1 048 697 A2

**Description**

It is well known that silicone rubbers formed from the vulcanization of polydiorganosiloxane fluids or gums alone generally have low elongation and tensile properties. One means for improving the physical properties of such silicone rubbers involves the incorporation of a reinforcing silica filler such as fumed silica, colloidal silica, silica gel, or precipitated silica into the fluid or gum prior to curing. However, such silicas have a tendency to interact with the polydiorganosiloxane fluid or gum causing a phenomenon typically referred to as "crepe hardening" in the silicone art. A great deal of effort was made in the past to treat the surface of reinforcing silica fillers with silicon compounds to make the surface of the silica hydrophobic. This surface treatment reduces or diminishes the tendency of the compositions to crepe harden and improves the physical properties of the cured silicone rubber. The present invention is a cost effective method for preparing hydrophobic precipitated silicas, which are particularly useful as reinforcing fillers in curable silicone compositions. In addition to being cost effective, the present method produces hydrophobic precipitated silicas which retain more of their structure, such as void volume, than hydrophobic precipitated silicas prepared by other methods known in the art.

U.S. Patent 3,015,645 teaches the making of hydrophobic silica powders by reacting an organosilicon compound such as dimethyldichlorosilane or trimethylmethoxysilane with a silica hydrogel in the presence of an acidic catalyst to form a hydrophobic silica hydrogel. The hydrophobic silica hydrogel in the aqueous phase is contacted with a water-immiscible organic solvent to convert the hydrophobic silica hydrogel to a hydrophobic silica organogel which segregates into the organic phase.

U.S. Patent 5,708,069 teaches a method for the preparation of hydrophobic silica gels under neutral conditions. The method comprises two steps wherein the first step the pH of a silica hydrosol is adjusted with a base to within a range of pH 3 to pH 7 to facilitate formation of a silica hydrogel. In the second step the silica hydrogel is contacted with an organosilicon compound in the presence of a catalytic amount of a strong acid to effect hydrophobing of the silica hydrogel. Burns et al. teach that during conduct of the second step it may be desirable to add a surfactant or water-miscible organic solvent to facilitate the reaction of the organosilicon compound with the hydrophilic silica hydrogel.

U.S. Patent 5,750,610 teaches a method for preparing organosilicate-modified silica gels. The method comprises two steps, wherein the first step an organosilicate-modified silica hydrosol is heat treated in the presence of a strong mineral acid at a pH less than pH 1 to form an organosilicate-modified silica hydrogel. In the second step, the organosilicate-modified silica hydrogel is contacted with an organosilicon compound in the presence of a catalytic amount of a strong acid to effect hydrophobing of the organosilicate-modified silica hydrogel thereby forming a hydrophobic organosilicate-modified hydrogel. Burns et al. teach that during conduct of the second step it may be desirable to add a surfactant or water-miscible organic solvent to facilitate the reaction of the organosilicon compound with the organosilicate-modified silica hydrogel.

U.S. Patent 4,072,796 describes a method where finely divided hydrophobic silica and silicates are prepared by precipitating alkali silicate solutions with mineral acids or metal salt solutions and treating with organohalosilanes. The organohalosilanes are a prepolycondensed organohalosilane or a mixture of prepolycondensed organohalosilanes.

U.S. Patent 5,009,874 describes a method for making a hydrophobic precipitated silica useful as a reinforcing filler in silicone elastomers. In a first step, the precipitated silica in aqueous suspension is hydrophobed with an organosilicon compound. In a second step, an organic solvent is added to effect granulation of the silica. The method is claimed to form hydrophobic, essentially spherical precipitated silica granules having a median particle size of at least 0.08 mm, a density of at least 0.15, a water wettability of at least 20% and maximum water uptake of 5%.

Hydrophobic precipitated silicas prepared by the present method are useful in many applications such as reinforcing and extending filler in natural rubbers, thermal insulation and as filler in flotation devices and are particularly useful as reinforcing fillers in silicone rubber compositions.

The present method comprises contacting an aqueous suspension of a hydrophilic precipitated silica with (1) a catalytic amount of an acid and (2) an organosilicon compound selected from organosilanes described by formula $R^1{}_aH_bSiX_{4-a-b}$      (1), organosiloxanes described by the average unit formula $R^2{}_nSiO_{(4-n)/2}$      (2) or organodisilazanes described by formula $(R^3{}_3Si)_2NH$      (3) in the presence of (3) a surfactant in an amount sufficient to facilitate reaction of the hydrophilic precipitated silica with the organosilicon compound to form a hydrophobic precipitated silica; where each $R^1$ is an independently selected hydrocarbon radical containing 1 to 12 carbon atoms, each $R^2$ is independently selected from hydrogen, chlorine, hydroxy or hydrocarbon radicals containing 1 to 12 carbon atoms with the proviso that at least 50 mole percent of the $R^2$ substituents are hydrocarbon radicals, each $R^3$ is an independently selected hydrocarbon radical containing 1 to 12 carbon atoms, each X is an independently selected hydrolyzable group bonded to silicon, a=1, 2 or 3; b=0 or 1; a+b=1, 2 or 3 with the proviso that when b=1 then a+b=2 or 3; and n is an integer from 2 to 3 inclusive.

The present invention is a method for the preparation of hydrophobic precipitated silica.

In the present method the hydrophilic precipitated silica is made hydrophobic by reacting hydroxyl groups on the silica with an organosilicon compound. By "precipitated silica", it is meant amorphous aggregates of primary particles of colloidal silica prepared by coagulation of a silica hydrosol, which aggregates have not at any point existed as macroscopic gel during their preparation. Methods for preparing such hydrophilic precipitated silicas are well known in the art and are described in, for example, Iler, The Chemistry of Silica, John Wiley & Sons, NY, NY, pp 554-564, 1979.

The precipitated silicas treated by the present method are distinguishable from amorphous silica gels by their different properties as referenced in Iler, supra. While amorphous silica gel is usually produced commercially at low pH by acidifying an aqueous solution of a soluble metal silicate, typically sodium silicate, with acid it can also be produced by adding sodium silicate to the acid. It should be noted that the terms alcogel and aquagel are sometimes used to indicate silica gels in which the pores are filled with the corresponding alcohol or water. The acid used is generally a strong mineral acid such as sulfuric acid or hydrochloric acid, although carbon dioxide is sometimes used. Since there is essentially no difference in density between the gel phase and the surrounding liquid phase while the viscosity is low, the gel phase does not settle out, i.e. it does not precipitate. Amorphous silica gel, then, may be described as a non-precipitated, coherent, rigid, three-dimensional network of contiguous particles of colloidal amorphous silica which can fill the whole volume of the sol. This gelatinous mass is sometimes referred to as a silica hydrogel. Following gel formation and washing the liquid is removed by drying to yield a silica xerogel. The state of subdivision of amorphous silica gel ranges from large solid masses to submicroscopic particles and the degree of hydration from almost anhydrous silica to a soft gelatinous mass containing on the order of 100 parts water per part of silica by weight. Amorphous aerogel is a class of amorphous silica gel which is produced by (a) forming amorphous silica gel by acidification in the conventional manner, (b) replacing most of the water in the gel with a liquid such as either an alcohol or another organic solvent which wets the surface of the silica gel pores, has a very low surface tension and evaporates at ordinary temperatures, and (c) removing the liquid under pressure above the critical temperature of the alcohol or solvent so that there is no meniscus between the liquid and gas phases.

In comparison, amorphous precipitated silica is produced commercially by combining an aqueous solution of a soluble metal silicate, typically an alkali metal silicate such as sodium silicate and an acid so that colloidal particles will grow in weakly alkaline solution and be coagulated by the alkali metal ions of the resulting soluble alkali metal salt. Various acids may be used including mineral acids and/or carbon dioxide. In the absence of a coagulant, the colloidal silica particles are not precipitated from solution at any pH. The coagulant used to effect precipitation may be the soluble alkali metal salt produced during formation of the colloidal silica particles, added electrolyte such as a soluble inorganic or organic salt or a combination of both.

Therefore, the term "precipitated silica" as used herein refers to amorphous precipitated aggregates of primary particles of colloidal silica prepared by coagulation of a silica hydrosol, which aggregates have not at any point existed as macroscopic gel during their preparation. The size of the aggregates and the degree of hydration may vary widely.

Precipitated silica powders differ from amorphous silica gels that were pulverized having a more open structure, i.e. a higher specific pore volume. In addition, the specific surface area of amorphous precipitated silica as measure by the Brunauer, Emmett, Teller (BET) method using nitrogen as the adsorbate is typically lower than that of amorphous silica gel.

The BET surface area of the hydrophilic precipitated silica used in the present method can generally be within a range of 50 $m^2$/g to 1000 $m^2$/g. Preferred is when the hydrophilic precipitated silica has a surface area within a range of 100 $m^2$/g to 500 $m^2$/g.

The hydrophilic precipitated silica is added to the present method as an aqueous suspension. The concentration of hydrophilic precipitated silica in the aqueous suspension is not critical and can be within a range of 4 to 90 weight percent. Preferred is when the concentration of hydrophilic precipitated silica in the aqueous suspension is within a range of 4 to 50 weight percent. Most preferred is when the concentration of hydrophilic precipitated silica in the aqueous suspension is within a range of 4 to 20 weight percent.

In the present method the aqueous suspension of hydrophilic precipitated silica is contacted with one or more of the organosilicon compounds described by formulas (1), (2) and (3) in the presence of a catalytic amount of an acid. The acid catalyst can be, for example, a mineral acid such as hydrochloric, hydroiodic, sulfuric, nitric, benzene sulfonic and phosphoric acid. When the organosilicon compound is, for example, a chlorosilane, the catalytic amount of the acid may be generated in situ by hydrolysis of the chlorosilane or the reaction of the chlorosilane directly with hydroxyl substituents of the hydrophilic precipitated silica. It is only necessary that the acid be present in an amount to effect reaction of the organosilicon compound with the hydrophilic precipitated silica. It is preferred that the acid catalyst provide a pH less than pH 6. More preferred is when the acid catalyst provides a pH less than pH 3.

The temperature at which the contacting of the present method is conducted is not critical and can be within a range of 15°C. to 250°C. Generally, it is preferred that the contacting be conducted at a temperature within a range of 20°C. to 150°C.

The present method requires the presence of a surfactant in an amount sufficient to facilitate the hydrophobing of the hydrophilic precipitated silica with the organosilicon compound. The surfactant can be nonionic or ionic. The surfactant can be anionic, cationic or amphoteric. The only limitation on the surfactant is that it facilitate the hydrophobing of the precipitated silica with the organosilicon compound at the levels added without having undesirable effects on the suitability of the resulting hydrophobic precipitated silica for its intended use. Representative examples of useful surfactants are found in the examples herein. The surfactant can be, for example, a polysiloxane polymer or copolymer silylated with an allyl endblocked polyethylene oxide.

The amount of surfactant added to the following process is that sufficient to facilitate the hydrophobing of the hydrophilic precipitated silica with the organosilicon compound and will depend upon such factors as the chemical composition of the surfactant and the organosilicon compound. Generally, 0.05 to 10 weight percent of surfactant may be added to the present method, based upon the combined weight of the aqueous suspension of hydrophilic precipitated silica and surfactant. Preferred is when 0.1 to 5 weight percent of surfactant is added to the method on the same basis. Even more preferred is when 0.1 to 3 weight percent of the surfactant is added to the method on the same basis.

In the present method the hydrophilic precipitated silica is reacted with one or more organosilicon compounds described by formulas (1), (2) and (3). In formula (1), each $R^1$ can be an independently selected hydrocarbon radical containing 1 to 12 carbon atoms. $R^1$ can be a saturated or unsaturated monovalent hydrocarbon radical. $R^1$ can be a substituted or non-substituted monovalent hydrocarbon radical. $R^1$ can be, for example, alkyl radicals such as methyl, ethyl, propyl, t-butyl, hexyl, heptyl, octyl, decyl and dodecyl; alkenyl radicals such as vinyl, allyl and hexenyl; substituted alkyl radicals such as chloromethyl, 3,3,3-trifluoropropyl and 6-chlorohexyl; and aryl radicals such as phenyl, naphthyl and tolyl. $R^1$ can be an organofunctional hydrocarbon radical containing 1 to 12 carbon atoms where, for example, the functionality is mercapto, disulfide, polysulfide, amino, carboxylic acid carbinol ester or amido. A preferred organofunctional hydrocarbon radical is one having mercapto, disulfide or polysulfide functionality.

In formula (1) each X is an independently selected hydrolyzable group bonded to silicon. Preferred is when each X is independently selected from halogen, alkoxy radicals containing 1 to 12 carbon atoms, acyloxy radicals containing 1 to 12 carbon atoms or oximo radicals. When X is a halogen, it is preferred that the halogen be chlorine. When X is an alkoxy radical, X may be, for example, methoxy, ethoxy and propoxy. When X is an acyloxy radical, X may be, for example, acetoxy. More preferred is where each X is selected from chlorine atoms and methoxy.

In formula (2), each $R^2$ is independently selected from hydrogen, chlorine, hydroxyl or hydrocarbon radicals containing 1 to 12 carbon atoms, with the proviso that at least 50 mole percent of the $R^2$ substituents are hydrocarbon radicals. $R^2$ can be the same as $R^1$ as described above. The organosiloxanes described by the average unit formula (2) can be, for example, linear or cyclic in structure. The viscosity of the organosiloxanes described by the average unit formula (2) is not limiting and can range from that of a fluid to a gum. Generally, higher molecular weight organosiloxanes will be cleaved by the acidic conditions of the present method allowing them to react with the hydrophilic precipitated silica.

In formula (3), each $R^3$ is independently selected from chlorine, hydroxy or hydrocarbon radicals containing 1 to 12 carbon atoms with the proviso that at least 50 mole percent of the $R^3$ substituents are hydrocarbon radicals. When $R^3$ is a hydrocarbon radicals, $R^3$ can be the same as those hydrocarbon radicals described for $R^1$. Preferred is when $R^3$ is methyl.

Examples of useful organosilicon compounds include diethyldichlorosilane, allylmethyldichlorosilane, methylphenyldichlorosilane, phenylethyldiethoxysilane, 3,3,3-trifluoropropylmethyldichlorosilane, trimethylbutoxysilane, sym-diphenyltetramethyldisiloxane, trivinyltrimethylcyclotrisiloxane, octamethylcyclotetrasiloxane, hexaethyldisiloxane, pentylmethyldichlorosilane, divinyldipropoxysilane, vinyldimethylchlorosilane, vinylmethyldichlorosilane, vinyldimethylmethoxysilane, trimethylchlorosilane, hexamethyldisiloxane, hexenylmethyldichlorosilane, hexenyldimethylchlorosilane, dimethylchlorosilane, dimethyldichlorosilane, hexamethyldisilazane, mercaptopropylmethyldimethoxysilane, bis{3-(triethoxysilyl)propyl}tetrasulfide, polydimethylcyclosiloxanes containing 3 to 20 dimethylsiloxy units and preferably 3 to 7 dimethylsiloxy units; and trimethylsiloxy, dimethyichlorosiloxy or hydroxydimethylsiloxy endblocked polydimethylsiloxane polymers having a viscosity within a range of 1 mPa • s to 1,000 mpa • s at 25°C.

The amount of organosilicon compound added to the method is that sufficient to adequately hydrophobe the hydrophilic precipitated silica to provide a hydrophobic precipitated silica suitable for its intended use. Generally, the organosilicon compound should be added to the method in an amount such that there is at least 0.1 organosilyl unit per square nanometer of BET surface area of the hydrophilic precipitated silica. It is preferred that the organosilicon compound be added in an amount providing excess organosilyl units in relation to the hydroxyl groups available on the hydrophilic precipitated silica for reaction. The upper limit of the amount of organosilicon compound added to the process is not critical since any amount in excess of the amount required to react with essentially all of the hydroxy substituents of the hydrophilic precipitated silica will act as a solvent for the method. Excess organosilicon compound can be removed by distillation, washing with a solvent or other known methods.

In the present method after formation of the hydrophobic precipitated silica, it may be desirable to add a water-immiscible organic solvent to the resulting aqueous suspension to effect separation of the hydrophobic precipitated silica from the aqueous suspension. It is preferred that the water-immiscible organic solvent be added at a solvent to silica weight ratio greater than 0.1:1 to effect separation of the hydrophobic precipitated silica from the aqueous suspension.

For purpose of this invention any organic solvent immiscible with water can be used. Suitable water-immiscible organic solvents include low molecular weight siloxanes such as hexamethyldisiloxane, octamethylcyclotetrasiloxane, diphenyltetramethyldisiloxane and trimethylsiloxy endblocked polydimethylsiloxane fluids. When a siloxane is employed as a solvent it may serve both as a solvent and as a reactant with the hydrophilic precipitated silica. In addition, suitable water-immiscible organic solvents include aromatic hydrocarbons such as toluene and xylene; heptane, hexane and other aliphatic hydrocarbon solvents; cycloalkanes such as cyclohexane; ethers such as diethylether and dibutylether; halohydrocarbon solvents such as methylene chloride, chloroform, ethylene chloride and chlorobenzene; and ketones such as methylisobutylketone.

The amount of water-immiscible organic solvent added to the present method should provide a solvent to silica weight ratio greater than 0.1:1. Preferred is a solvent to silica weight ratio within a range of 0.1:1 to 10:1. Most preferred is a solvent to silica weight ratio within a range of 1:1 to 5:1. The upper limit for the amount of water-immiscible solvent added to the method is limited only by economic considerations such as solvent cost, solvent recovery or disposal expense and equipment capacity.

It is preferred that the water-immiscible organic solvent have a boiling point below 250°C. to facilitate its removal from the hydrophobic precipitated silica. However, the boiling point of the water-immiscible organic solvent is not critical since the solvent may be removed from the hydrophobic silica by filtration, centrifuging or other suitable means.

The hydrophobic precipitated silica formed by the present method may be used as an aqueous suspension or slurry, may be recovered by such techniques as filtration or centrifugation with or without the addition of water immiscible organic solvent to facilitate recovery, may be further washed to reduce contaminates and may be dried prior to use.

The following examples are provided to illustrate the present invention. These examples are not intended to limit the scope of the claims provided herein.

Example 1

A number of precipitated silicas were formed having different BET surface areas and hydrophobed with bis(triethoxysilylpropyl)tetrasulfide at various concentrations. The precipitated silicas were formed by neutralizing a sodium silicate solution, filtering the precipitated silica from solution and washing to remove electrolytes. An aliquot of each precipitated silica was dried and the BET surface area determined to be as reported in Table 1. To a 5 L flask having a bottom drain and equipped with a thermometer, mechanical stirrer and a Dean-Stark trap equipped with a reflux condenser was added 2000 g of the precipitated silica filter cake (230 g of silica), 35.7 g of polyoxyethylene ether (Brij®35 surfactant, Aldrich Chemical Company, Milwaukee, WI), and 100 ml of deionized water to form a suspension. To this stirred suspension was added bis(triethoxysilylpropyl)tetrasulfide (Si69®, Degussa AG Co., Ridgefield Park, NJ) in the amounts described in Table 1 resulting in a suspension having a pH of 6.1. After stirring for one minute, 17 ml of concentrated HC1 was added to the suspension to adjust to pH 1.25. The resulting mixture was heated at 65°C. for one hour. The mixture was cooled to room temperature, filtered, re-slurried in 4 L of deionized water and refiltered. The filter cake was washed with 1 L of deionized water and then dried overnight at ambient temperature and under vacuum for several hours at 110°C. to recover a dried hydrophobic precipitated silica. The weight of dried hydrophobic silica recover is reported as the Yield in Table 1. The BET surface areas for the hydrophilic precipitated silicas and hydrophobic precipitated silicas were determined by the Brunauer-Emmett-Teller method as described in the Journal of the American Chemical Society, Vol. 60, p 309, Feb. 1938, and these determinations are reported in Table 1.

Table 1

| Properties of Hydrophilic Precipitated Silica | | | | |
|---|---|---|---|---|
| Sample No. | Yield (g) | Si69 Added (g) | Pre-Treatment Surface Area ($m^2$/g) | Treated Surface Area ($m^2$/g) |
| 1-1 | 260 | 54.8 | 280 | 144 |
| 1-2 | 253 | 50.9 | 260 | 192 |
| 1-3 | 259 | 33.3 | 170 | 107 |
| 1-4 | 247 | 21.3 | 109 | * |
| 1-5 | 261 | 36.4 | 186 | * |
| 1-6 | 253 | 27.0 | 138 | * |
| 1-7 | 252 | 35.2 | 180 | * |
| 1-8 | 265 | 44.6 | 228 | * |

*Indicates test data not available

Example 2

A number of hydrophobic precipitated silicas were prepared demonstrating the effects of the treatment and isolation method on the physical characteristics of the hydrophobic precipitated silicas hydrophobed with dimethyldichlorosilane in the presence of Dow Corning® Q2-5211 Surfactant. A hydrophilic precipitated silica was formed by neutralizing a sodium silicate solution and portions of the resulting filter cake were used in each of the methods described below. A portion of the filter cake was dried and the dried untreated hydrophilic precipitated silica determined to have a BET surface area of 320 $m^2$/g.

The treated precipitated silicas were dispersed into a vinyl functional polydimethylsiloxane gum (0.18 mole% vinyl) at 38 parts per hundred (pph) and the resulting silicone base mixed for 2 hours. To each silicone base was added 0.3 parts per hundred of 2,5-dimethyl-2,5-di(t-butylperoxy)hexane. This catalyzed silicone base was allowed to age for 1 to 3 days. The plasticity of the catalyzed bases was determined after 24 sitting by ASTM Standard D926 and are reported in Table 2a. Cured slabs of silicone rubber were prepared by hot pressing samples of the catalyzed silicone base in a mold at 5000 psi for 10 minutes at 177°C.

Mechanical properties of the cured silicone rubber were determined by the following ASTM standard methods: Tensile, ASTM D412; Tear Die B, ASTM D624; Percent Elongation (%), ASTM D412; 100% Modulus (100%), ASTM D412; and percent compression set (Comp. Set.) was determined by ASTM Standard D395 at 22 hours. The results of this testing are reported in Table 2b.

Method 2-1. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning Q2-5211 Surfactant (Dow Corning Corporation, Midland MI, a product of the hydrosilylated of 1,1,1,3,5,5,5-heptamethyltrisiloxane with an allyl endblocked polyethylene oxide (AE-400, The Dow Chemical Company, Midland, MI)) was added followed by the addition of 69.1 g of dimethyldichlorosilane. The resulting mixture was heated at 65°C. for 20 minutes. After cooling the mixture to room temperature, 1.3 L of methylisobutylketone (MIBK) was added to the flask and the aqueous layer drained. Then, 500 ml of additional MIBK was added to the flask and the resulting suspension refluxed to remove residual water by azeotropic distillation. The suspension was transferred to shallow pans and the MIBK allowed to evaporate over night at ambient temperature. The resulting semi-dry hydrophobic precipitated silica was further dried for 16 hours at 100°C.

Method 2-2. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning Q2-5211 Surfactant was added followed by the addition of 69.1 g of dimethyldichlorosilane. The resulting mixture was heated at 65°C. for 20 minutes. After cooling the mixture to room temperature, the pH of the mixture was adjusted to pH 5.1 with an aqueous sodium hydroxide solution and 1.3 L of MIBK were added to the flask. The aqueous layer was drained from the flask and 500 ml of additional MIBK were added. The mixture was transferred to shallow pans and the MIBK allowed to evaporate at ambient temperature. The resulting semi-dry hydrophobic precipitated silica was further dried for 16 hours at 100°C.

Method 2-3. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning Q2-5211 Surfactant were added followed by the addition of 69.1 g of dimethyldichlorosilane. The resulting mixture was heated at 65°C. for 20 minutes. After cooling the mixture to room temperature, the pH of the mixture was adjusted to pH 6.2 with an aqueous sodium hydroxide solution. Then, 10 L of deionized water containing 50 g of Dow Corning Q2-5211 were added and the resulting mixture filtered to recover the hydrophobic precipitated silica. The hydrophobic precipitated silica was dried for 60 hours at ambient temperature and further dried for 16 hours at 100°C.

Method 2-4. A 1500 g sample of the precipitated silica (11.6 Wt.% solids) was diluted in 1.5 L of deionized water and added to a 5 L flask equipped as described in Example 1. Then, with stirring, 15 g of Dow Corning Q2-5211 Surfactant were added followed by the addition of 69.1 g of dimethyldichlorosilane. The resulting mixture was heated at 65°C. for 26 minutes. After cooling the mixture to room temperature, the pH of the mixture was adjusted to pH 6.7 with an aqueous sodium hydroxide solution. Then, 10 L of deionized water were added and the resulting mixture filtered to recover the hydrophobic precipitated silica. The hydrophobic precipitated silica was dried for 60 hours at ambient temperature and further dried for 16 hours at 100°C.

Table 2a

| Effect of Treatment and Isolation Method on Physical Properties of Hydrophobic Precipitated Silica | | |
|---|---|---|
| Method No. | Surface Area ($m^2$/g) | Plasticity (mil) |
| 2-1 | 211 | 123 |
| 2-2 | 218 | 158 |
| 2-3 | 144 | 77 |
| 2-4 | 192 | 159 |

Table 2b

| Effect of Hydrophobic Silica on Mechanical Properties of Silicone Rubber | | | | | |
|---|---|---|---|---|---|
| Method No. | Tensile (MPa) | Modulus(100%) (KPa) | Elongation (%) | Tear B (kN/m) | Comp. Set (% @ 22 h) |
| 2-1 | 6.98 | 731 | 778 | 10.9 | 84 |
| 2-2 | 6.75 | 807 | 772 | 11.6 | 82 |
| 2-3 | 3.81 | 579 | 833 | 8.2 | 104 |
| 2-4 | 6.94 | 854 | 782 | 10.7 | 75 |

Example 3

A number of hydrophobic precipitated silicas were prepared demonstrating the effects of the treatment and isolation method on the physical characteristics of the hydrophobic precipitated silica hydrophobed with dimethyldichlorosilane in the presence of Dow Corning® 193 Surfactant. A hydrophilic precipitated silica was formed by neutralizing a sodium silicate solution and portions of the resulting filter cake were used in each of the methods described below. A portion of the filter cake was dried and the dried hydrophilic precipitated silica determined to have a BET surface area of 320 $m^2$/g.

The BET surface area of each hydrophobic precipitated silica was determined. Each of the hydrophobic precipitated silicas were incorporated into a curable silicone base prepared by the method described in Example 2 and plasticity and physical properties of the cured silicone base determined as described in Example 2.

Method 3-1. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning 193 Surfactant (Dow Corning Corporation, Midland MI, a product of the hydrosilylated of a trimethylsilyl endblocked dimethylsiloxy(methylhydrogensiloxy) copolymer with an allyl endblocked polyethylene oxide (AE-501, The Dow Chemical Company, Midland, MI)) were added followed by the addition of 69.1 g of dimethyldichlorosilane. The resulting mixture was heated at 65°C. for 25 minutes. After cooling the mixture to room temperature, 1.2 L of MIBK was added to the flask and the aqueous layer drained. Then, 500 ml of additional MIBK was added to the flask and the resulting suspension refluxed to remove residual water by azeotropic distillation. The suspension was transferred to shallow pans and the MIBK allowed to evaporate under ambient conditions. The resulting semi-dry hydrophobic precipitated silica was further dried for 16 hours at 100°C.

Method 3-2. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning 193 Surfactant was added followed by the addition of 69.1 g of dimethyldichlorosilane. The resulting mixture was heated at 65°C. for 25 minutes. After cooling the mixture to room temperature, the pH of the mixture was adjusted to pH 5.9 with an aqueous solution of sodium hydroxide, 1.4 L of MIBK was added to the flask and the aqueous layer drained. The MIBK phase was washed with 1 L of deionized water. The aqueous phase was drained from the flask and the MIBK phase transferred to shallow pans and the MIBK allowed to evaporate. The resulting semi-dry hydrophobic precipitated silica was further dried for 16 hours at 100°C.

Method 3-3. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning 193 Surfactant was added followed by the addition of 69.1 g of dimethyldichlorosilane. The resulting mixture was heated at 65°C. for 25 minutes. After cooling the mixture to room temperature, the pH of the mixture was adjusted to pH 6.5 with an aqueous solution of sodium hydroxide. Then, 10 liters of deionized water containing 50 g of Dow Corning 193 Surfactant were added and the resulting mixture filtered to recover the hydrophobic precipitated silica. The hydrophobic precipitated silica was dried for 60 hours at ambient temperature and further dried for 16 hours at 100°C.

Method 3-4. A 1500 g sample of the hydrophilic precipitated silica (11.6 Wt.% solids) was diluted in 1.5 L of deionized water and added to a 5 L flask equipped as described in Example 1. Then, with stirring, 15 g of Dow Corning 193 Surfactant were added followed by the addition of 69.1 g of dimethyldichlorosilane. The resulting mixture was heated at 65°C. for 26 minutes. After cooling the mixture to room temperature, the pH of the mixture was adjusted to pH 5.8 with an aqueous solution of sodium hydroxide. Then, 10 liters of deionized water were added and the resulting mixture filtered to recover the hydrophobic precipitated silica. The hydrophobic precipitated silica was dried for 60 hours at ambient temperature and further dried for 16 hours at 100°C.

Table 3a

| Effect of Treatment and Isolation Method on Physical Properties of Hydrophobic Precipitated Silica | | |
|---|---|---|
| Method No. | Surface Area ($m^2$/g) | Plasticity (mil) |
| 3-1 | 205 | 124 |
| 3-2 | 209 | 109 |
| 3-3 | 177 | 94 |
| 3-4 | 174 | 86 |

Table 3b

| Effect of Hydrophobic Silica on Mechanical Properties of Silicone Rubber | | | | | |
|---|---|---|---|---|---|
| Method No. | Tensile (MPa) | Modulus(100%) (KPa) | Elongation (%) | Tear B (kN/m) | Comp. Set (% @ 22 h) |
| 3-1 | 6.21 | 648 | 939 | 11.9 | 88 |
| 3-2 | 3.87 | 1351 | 389 | 9.5 | 52 |
| 3-3 | 5.21 | 786 | 760 | 8.9 | 82 |
| 3-4 | 3.52 | 1082 | 439 | 7.7 | 47 |

Example 4

A hydrophilic precipitated silica was treated with 3,3,3-trifluoropropyldimethyichlorosilane in the presence of a nonionic surfactant to form a hydrophobic precipitated silica. A hydrophilic precipitated silica was formed by neutralizing a sodium silicate solution and then filtering and washing. An aliquot of the hydrophilic precipitated silica was spray dried and the BET surface area of the dried silica determined to be 337 m$^2$/g. 1750 g of the hydrophilic precipitated silica filter cake (11.8 Wt.% solids) was placed in a 5 L flask equipped as described in Example 1. With stirring, 700 ml of deionized water and 40 g of Brij$^®$35 Nonionic Surfactant were added to the flask followed by the addition of a mixture consisting of 89.7 g of 3,3,3-trifluoropropyldimethylchlorosilane and 3.78 g of vinyldimethylchlorosilane. The resulting mixture was heated at 70°C. for 30 minutes. After cooling the mixture to ambient temperature, 1500 ml of methylisobutylketone (MIBK) were added to the flask. The aqueous phase was drained from the flask and 1 L of deionized water and 500 ml of MIBK were added. The aqueous phase was drained from the flask, an additional 1 L of MIBK added and the flask content refluxed to remove water by azeotropic distillation. The resulting slurry was poured into shallow pans and the MIBK allowed to evaporate overnight at ambient temperature. The resulting hydrophobic precipitated silica was further dried for 16 hours at 120°C. and 20 hours at 150°C. The yield of hydrophobic precipitated silica was 266.3 g.

Example 5

A precipitated silica was treated with a mixture of dimethyldichlorosilane and vinyldimethylchlorosilane in the presence of various commercially available surfactants to form hydrophobic precipitated silicas. A hydrophilic precipitated silica was formed by neutralizing a sodium silicate solution and then filtering and washing. An aliquot of the precipitated silica was spray dried and the BET surface area of the dried silica determined to be 340 m$^2$/g. The filter cake of precipitated silica was suspended in water to form a 5 weight percent silica suspension. Surfactants at a concentration of 1 weight percent, based on the weight of the silica, as described in Table 5a and 5b were added to 16.3 kg of the silica suspension followed by the addition of 13.7 kg of deionized water and a mixture comprising 577.4 g of dimethyldichlorosilane and 46.6 g of vinyldimethylchlorosilane. In example run 5-10, the surfactant was only added at a concentration of 0.01 weight percent based on the weight of the silica. The resulting mixture was heated at 70°C. for 1 hour and then cooled and neutralized to a pH of 7 with aqueous sodium hydroxide. The resulting hydrophobic precipitated silica slurry was filtered, washed to remove electrolytes and then sprayed dried. Physical characteristics of the dried hydrophobic precipitated silica were determined by methods described in Examples 1 and 2. The dried hydrophobic precipitated silicas were compound into curable silicone bases as described in Example 2, cured and the physical properties of the cured silicone rubber determined by the methods described in Example 2. The results of this testing are described in Table 5c and 5d.

Table 5a

| Source of Surfactants | | | |
|---|---|---|---|
| No. | Trade Name | Manufacturer | Address |
| 5-1 | DC 193 | Dow Corning Corp. | Midland, MI |
| 5-2 | Masil SF 19 | BSAF | Gurnee, IL |
| 5-3 | Macol 48 | BSAF | Gurnee, IL |
| 5-4 | Mafo CAB | BSAF | Gurnee, IL |
| 5-5 | Macol OP 10 SP | BSAF | Gurnee, IL |
| 5-6 | S-Maz 65K | BSAF | Gurnee, IL |
| 5-7 | Brij 35 | Aldrich Chemical Co. | Milwaukee, WI |
| 5-8 | Arquad 2HT-75 | AKZO Chemical, Inc. | Chicago, IL |
| 5-9 | Avenel N-1525-90 | BSAF | Gurnee, IL |
| 5-10 | Fluorad FC 170C | 3M | St. Paul, MN |
| 5-11 | Ethomeen 18/60 | AKZO Chemical, Inc. | Chicago, IL |

Table 5b

| Description of Surfactants | | |
|---|---|---|
| No. | Type | Generic description |
| 5-1 | nonionic | See Example 3 |
| 5-2 | nonionic | ethoxylated silicone based |
| 5-3 | nonionic | glycol ether based |
| 5-4 | amphoteric | coca amido propyl betaine based |
| 5-5 | nonionic | octylphenol/ethylene oxide based |
| 5-6 | nonionic | sorbitan tristearate based |
| 5-7 | nonionic | polyoxethylene lauryl ether based |
| 5-8 | cationic | quaternary salt of tallow |
| 5-9 | nonionic | alkylchloride end-capped ethylene oxide |
| 5-10 | nonionic | fluorocarbon based |
| 5-11 | nonionic/cationic | ethoxylated C18 amine |

Table 5c

| Physical Characteristics of Hydrophobic Precipitated Silicas | | | |
|---|---|---|---|
| No. | Surface Area ($m^2$/g) | Void Volume (ml/g) | Plasticity* (mil) |
| 5-1 | 219 | 4.45 | 140 |
| 5-2 | 216 | 4.59 | 135 |
| 5-3 | 218 | 3.85 | 148 |
| 5-4 | 228 | 4.14 | 137 |
| 5-5 | 222 | 4.29 | 137 |
| 5-6 | 222 | 4.51 | 140 |
| 5-7 | 220 | 4.39 | 139 |
| 5-8 | 223 | 4.18 | 142 |
| 5-9 | 217 | 5.06 | 141 |
| 5-10 | 219 | 4.40 | 129 |
| 5-11 | 225 | 4.61 | 173 |

* As determined 7 days after formation of silicone base

Table 5d

| No. | Durometer (Shore A) | Tensile (MPa) | Elongation (%) | Tear B (kN/m) |
|---|---|---|---|---|
| | Mechanical Properties of Silicone Rubber Comprising Hydrophobic Precipitated Silicas | | | |
| 5-1 | 54 | 7.58 | 435 | 14.0 |
| 5-2 | 64 | 6.56 | 340 | 12.3 |
| 5-3 | 64 | 6.52 | 329 | 11.0 |
| 5-4 | 68 | 6.83 | 327 | 11.7 |
| 5-5 | 64 | 7.12 | 412 | 14.5 |
| 5-6 | 65 | 6.68 | 342 | 13.1 |
| 5-7 | 65 | 5.94 | 630 | 11.9 |
| 5-8 | 64 | 6.00 | 294 | 10.7 |
| 5-9 | 64 | 7.24 | 404 | 11.4 |
| 5-10 | 65 | 5.8 | 271 | 9.6 |
| 5-11 | * | * | * | * |

*Indicates testing not conducted

## Claims

1. A method for the preparation of hydrophobic precipitated silica comprising contacting an aqueous suspension of a hydrophilic precipitated silica with (1) a catalytic amount of an acid and (2) an organosilicon compound selected from organosilanes of formula $R^1_a H_b SiX_{4-a-b}$, organosiloxanes of the average unit formula $R^2_n SiO_{(4-n)/2}$ and organodisilazanes of formula $(R^3_3 Si)_2 NH$, in the presence of (3) a surfactant in an amount sufficient to facilitate reaction of the hydrophilic precipitated silica with the organosilicon compound to form a hydrophobic precipitated silica; where each $R^1$ is an independently selected hydrocarbon radical containing 1 to 12 carbon atoms, each $R^2$ is independently selected from hydrogen, chlorine, hydroxy and hydrocarbon radicals containing 1 to 12 carbon atoms with the proviso that at least 50 mole percent of the $R^2$ substituents are hydrocarbon radicals, each $R^3$ is an independently selected hydrocarbon radical containing 1 to 12 carbon atoms, each X is an independently selected hydrolyzable group bonded to silicon, a=1, 2 or 3; b=0 or 1; a+b=1, 2 or 3 with the proviso that when b=1 then a+b=2 or 3; and n is an integer from 2 to 3 inclusive.

2. A method according to claim 1 where the organosilicon compound comprises chlorine substituted on silicon and the catalytic amount of an acid is generated in situ by hydrolysis of the chlorine or reaction of the organosilicon compound with hydroxyl substituents of the hydrophilic precipitated silica.

3. A method according to claim 1 or 2, where the acid is added in an amount to provide a pH in the aqueous suspension less than pH 3.

4. A method according to any of claims 1 to 3, where the contacting is conducted at a temperature within a range of 15°C. to 250°C.

5. A method according to any of claims 1 to 4, where the surfactant is a polysiloxane polymer or copolymer silylated with an allyl endblocked polyethylene oxide.

6. A method according to any of claims 1 to 5, further surfactant is added in an amount of about 0.05 to 10 weight percent, based on the combined weight of the aqueous suspension of the hydrophilic precipitated silica and the surfactant.

7. A method according to any of claims 1 to 6, where the organosilicon compound is an organosilane.

8.  A method according to any of claims 1 to 6, where the organosilicon compound is an organosiloxane.

9.  A method according to any of claims 1 to 6, where the organosilicon compound is an organodisilazane.

10. A method according to any of claims 1 to 9, further comprising adding a water-immiscible organic solvent to the aqueous suspension after formation of the hydrophobic precipitated silica at a solvent to silica weight ratio within a range of 1:1 to 5:1 to facilitated separation of the hydrophobic precipitated silica from the aqueous suspension.